Europäisches Patentamt

**European Patent Office**

(19)

**Office européen des brevets**

(11) Numéro de publication: **0 027 648**
**B1**

(12) **FASCICULE DE BREVET EUROPEEN**

(45) Date de publication du fascicule du brevet: **06.06.84**   (51) Int. Cl.³: **H 01 M 4/88**

(21) Numéro de dépôt: **80106331.4**

(22) Date de dépôt: **17.10.80**

(54) **Procédé de fabrication par calandrage de bandes minces poreuses notamment bandes d'électrodes pour piles à combustible.**

(30) Priorité: **18.10.79 FR 7925877**

(43) Date de publication de la demande:
**29.04.81 Bulletin 81/17**

(45) Mention de la délivrance du brevet:
**06.06.84 Bulletin 84/23**

(84) Etats contractants désignés:
**BE CH DE FR GB IT LI LU NL SE**

(56) Documents cités:
**FR - A - 1 436 271**
**FR - A - 1 534 550**
**FR - A - 1 550 508**
**FR - A - 1 598 299**
**FR - A - 2 090 075**
**FR - A - 2 132 038**
**FR - A - 2 143 593**
**FR - A - 2 171 092**
**FR - A - 2 355 382**
**FR - A - 2 430 101**
**US - A - 4 166 143**

(73) Titulaire: **SOCIETE GENERALE DE CONSTRUCTIONS ELECTRIQUES ET MECANIQUES "ALSTHOM et Cie" Société en nom collectif dite**
**38, Avenue Kléber**
**F-75784 Paris Cedex 16 (FR)**

(72) Inventeur: **Groult, Pierre**
**27 Route de Souzy**
**Villeconin, F-91580 Etrechy (FR)**
Inventeur: **Civier, Danielle**
**Chemin des Bourguignons**
**F-91310 Longpont sur Orge (FR)**
Inventeur: **Prehaut, Jacques**
**Les Chaperons**
**F-77170 Brie Comte Robert (FR)**

(74) Mandataire: **Weinmiller, Jürgen et al,**
**Zeppelinstrasse 63**
**D-8000 München 80 (DE)**

Courier Press, Leamington Spa, England.

## Description

La présente invention concerne un procédé de fabrication en continu de bandes comportant au moins une couche mince poreuse conductrice destinées notamment à la réalisation d'électrodes pour piles à combustibles, comprenant la préparation du matériau constitutif de ladite couche mince par mélange d'une dispersion aqueuse d'une poudre de carbone, supportant éventuellement un catalyseur, avec une émulsion d'un liant et le passage dudit matériau, sous forme pulvérulente, entre les rouleaux d'une calandreuse. Un tel procédé est connu, par exemple à partir du document FR—A—2 171 092.

Lors de la fabrication d'une électrode il est nécessaire d'associer à ces bandes un support, tel qu'une grille ou un tissu, qui après calandrage est noyé dans la couche formée, ce qui crée une anisotropie pouvant être préjudiciable pour les utilisations envisagées.

Par ailleurs, l'acheminement du matériau pulvérulent est généralement assuré par une bande transporteuse qui traverse également la calandreuse, du fait qu'en général la couche formée n'est pas auto porteuse. Une telle couche doit ensuite faire l'objet d'un traitement thermique en vue d'être consolidée.

En outre, si l'on ne prend pas de précautions particulières, pouvant mettre en oeuvre des dispositifs d'alimentation de la calandreuse complexes, il se produit un phénomène dit de "mottage" résultant du collage mutuel des grains lors du calandrage qui empêche une alimentation homogène de la calandreuse et se traduit par une inhomogénéité de la couche réalisée.

Enfin ce mode de fabrication implique généralement, en vue de l'obtention d'une porosité appropriée, la présence de produits porophores dans le matériau pulvérulent, dont l'élimination après le calandrage peut être préjudiciable aux utilisations envisagées.

La présente invention a pour but de réaliser selon une cadence industrielle, en continu, de bandes poreuses pouvant comporter plusieurs couches de faible épaisseur, de l'ordre de quelques microns à quelques centaines de microns et cela par simple mise en oeuvre d'une calandreuse, en alimentant celle-ci au moyen de matériaux pulvérulents.

Elle a pour but également la réalisation de couches minces homogènes, à porosité uniforme, ne présentant pas de cassures et autoporteuses.

L'invention a pour objet un procédé de fabrication tel que décrit ci-dessus, caractérisé par le fait que de manière à éviter une précipitation spontanée lors du mélange, ce dernier est effectué à une température inférieure à 18°C, les pH de la dispersion de poudre et de l'émulsion de liant étant sensiblement les mêmes, puis après la précipitation du liant sur la poudre, séchage et broyage à sec, on poursuit le broyage en humidifiant au moyen d'un liquide destiné à éviter l'adhérence des grains aux rouleaux de la calandreuse tout en lubrifiant lesdits grains, le matériau ainsi obtenu, exempt de tout produit porophore, étant calandré sans utilisation de support.

L'absence de porophore et la non utilisation de support lors du calandrage permettent d'obtenir une couche mince présentant une excellente homogénéité et exempte de cassures.

Avantageusement, pour réaliser une précipitation homogène du liant sur la poudre de carbone, on utilise une dispersion aqueuse et une émulsion de liant très diluées pour obtenir un mélange aussi homogène que possible de ces deux constituants avant précipitation.

Ainsi, la dispersion aqueuse de poudre de carbone peut comprendre 10 à 50 g/l de carbone suivant la nature du carbone utilisé, ce dernier supportant ou non un catalyseur, tel que du platine par exemple. On peut utiliser indifféremment du noir de carbone ou du charbon actif.

Après dispersion, on effectue un dégazage de manière à éviter la présence de bulles d'air au niveau de la surface des grains de carbone.

Selon l'invention, le liant est du polytétrafluoréthylène et on utilise avantageusement une émulsion comportant environ 100 à 120 g d'extrait sec par litre. Cette émulsion peut être réalisée par dilution d'une émulsion plus concentrée pouvant contenir par exemple 400 à 600 g de polytétrafluoréthylène par kilo d'émulsion.

Cette émulsion de liant peut contenir des stabilisants, qui sont ensuite éliminés après le processus de précipitation par simple lavage à l'eau.

On effectue le mélange de la dispersion de carbone et de l'émulsion de liant sous température contrôlée, inférieure à 18°C et de préférence située entre 12 et 15°C de manière à éviter une précipitation spontanée. De même, dans ce but les Ph de la dispersion et de l'émulsion sont équilibrés avant le mélange.

La précipitation est ensuite initiée soit par élévation de la température, par exemple vers 25—30°C, soit par addition de cations, par exemple par introduction d'acide chlorhydrique dilué.

Après précipitation, et éventuel lavage à l'eau selon la présence ou non de stabilisants dans l'émulsion, on effectue un séchage, puis un broyage à sec, de préférence dans un broyeur à couteaux.

Après un certain temps de broyage, et lorsque celui-ci se poursuit, on procède à une humidification par un liquide destiné à éviter l'adhérence des grains aux rouleaux de la calandreuse tout en lubrifiant lesdits grains.

Selon l'invention, ledit liquide est choisi dans le groupe comprenant la cyclohexanone, la tétraline, la décaline, le white spirit.

On peut ainsi utiliser un white spirit présentant un point d'ébullition situé vers 140—160°C.

A titre d'exemple, on peut humidifier en utilisant 15 à 20 mp de liquide pour 30 à 50 g de produit solide.

Après cette opération le produit pulvérulent est placé dans une trémie qui alimente directement la calandreuse sans utilisation d'un support et après calandrage à température ambiante on obtient une bande poreuse, autoporteuse, conductrice.

Le liant peut être également constitué par du chlorure de polyvinyle, mais dans ce cas l'utilisation de cyclohexanone comme liquide humidificateur est à proscrire car ce corps est un solvant du chlorure de polyvinyle.

La porosité de la couche mince est ajustée à une valeur prédéterminée par réglage notamment du débit de la poudre alimentant la calandreuse et de la vitesse de rotation des cylindres de la calandreuse.

L'épaisseur de la bande peut être ajustée par simple réglage de l'écartement des cylindres de la calandreuse.

Pratiquement des épaisseurs de quelques microns à quelques centaines de microns peuvent être obtenues.

Le procédé selon l'invention permet de réaliser des bandes minces multicouches poreuses par cocalandrage à froid de plusieurs couches obtenues selon le procédé décrit ci-dessus.

On peut ainsi fabriquer en continu une bande comportant deux couches, une couche dite couche d'arrêt comportant du carbone et un liant, une couche dite couche catalytique comportant du carbone supportant un catalyseur et un liant; la proportion pondérale de liant dans chacune des couches, notamment de polytétrafluoréthylene, peut être comprise entre 20 et 99%, celle en carbone étant comprise entre 80 et 1%.

D'autres caractéristiques et avantages de l'invention ressortent de la description qui suit, donnée à titre d'exemple purement illustratif mais nullement limitatif, et qui s'applique à la réalisation d'une électrode bicouche susceptible d'être mise en oeuvre dans une pile à combustible hydrogène-air par exemple.

L'électrode comporte donc une couche d'arrêt et une couche catalytique.

On rappelle donc que la couche d'arrêt qui est conductrice assure le transfert électronique de la couche catalytique au collecteur de la pile tout en permettant grâce à sa porosité aux réactifs gazeux (hydrogène ou air) d'atteindre par diffusion ladite couche catalytique sous faible pression d'alimentation.

De plus, grâce à son hydrophobie la couche d'arrêt permet de localiser l'interface liquide-gaz au sein de la couche active.

En ce qui concerne maintenant la couche active ou catalytique, elle permet grâce à sa conductivité le transfert électronique des zones réactionnelles vers le collecteur, à travers la couche d'arrêt, tout en assurant la diffusion ionique vers les zones réactionnelles ou a partir de ces dernières ainsi que l'apport en réactifs et celà par suite de sa porosité ainsi que de son épaisseur.

Bien entendu elle présente une activité catalytique vis-à-vis du processus électrochimique.

Pour fabriquer de telles couches on opère donc comme suit.

En premier lieu, pour préparer la couche catalytique d'une part on disperse dans 4,5 litres d'eau bidistillée, 120 gr. de carbone à 20% de platine tout en agitant et à température de 12°C environ, puis on dégaze soigneusement cette suspension.

D'autre part on dilue dans 3 litres d'eau bidistillée à température de 12 à 15°C, 487 gr. d'une émulsion de PTFE à 37% d'extrait sec et dénommée "Soreflon" dans le commerce.

On verse ensuite la dispersion de catalyseur dans l'émulsion de PTFE et celà à une température inférieure à 15°C, en maintenant une agitation apte à homogénéiser le mélange tout en évitant le "crémage" de ce dernier. Le liant est alors précité par addition d'acide chlorhydrique dilué, le temps de précipitation étant de 10 minutes environ. On filtre, puis on sèche le coagulat en étuve à 80°C durant 10 heures. On effectue ensuite un broyage à sec et pendant ce traitement une très légère humidification par un liquide tel que la cyclohexanone, la tétraline, la décaline, le white spirit.

Un tel liquide a pour but d'éviter l'adhérence des grains aux rouleaux de la calandreuse, tout en les lubrifiant, s'opposant ainsi au phénomène dit de "mottage" résultant de l'adhérence mutuelle desdits grains. En outre un tel liquide permet d'ajuster la porosité finale entre certaines limites.

Dans le cas du polytétrafluoréthylène, la cyclohexanone est avantageusement utilisée.

La poudre ainsi humidifiée sert donc à alimenter la calandreuse pour obtention d'une bande mince comme précédemment décrit.

En deuxième lieu, on prépare la couche d'arrêt comme décrit ci-après.

On disperse 90 gr. de carbone commercialisé sans le nom "Vulcan XC72" dans 2 litres d'eau bidistillée tout en agitant puis on dégaze cette suspension. On prépare par ailleurs une émulsion de 568 gr de Soreflon dans 2 litres d'eau bidistillée à une température de 12 à 15°C. On mélange ensuite la dispersion et la suspension comme dans le cas de la couche catalytique.

La précipitation est alors effectuée en élevant la température au dessus de 26°C durant 25 minutes environ.

On sèche en étuve à 80°C durant 24 heures, on broie et on humidifie comme dans le cas de la couche catalytique.

La poudre ainsi obtenue alimente donc à son tour la calandreuse et l'on obtient une autre bande mince.

Les deux bandes ainsi obtenues sont alors cocalandrées afin de réaliser l'électrode bicouche qui est alors séchée et éventuellement traitée thermiquement pour modifier l'hydrophobie. L'électrode ainsi préparée comporte 30% de Vulcan XC 72 et 70% de PTFE pour la couche d'arrêt 40% de catalyseur et 60% de PTFE pour la couche catalytique.

De telles électrodes bicouches peuvent être aisément intégrées dans des structures de piles à combustible du type filtre-presse par exemple du type de celle décrite par la Demanderesse dans la demande de brevet français FR—A—2259447 du 25 janvier 1974 pour "Nouvelle structure et nouveau système de pile à combustible notamment pour combustible carboné et air atmosphérique", piles dans lesquelles la collection du courant peut être assurée au moyen de collecteurs à points ou à lignes distants entre eux de quelques millimètres, par exemple, par un collecteur gaufré bipolaire. Généralement, un tel collecteur peut être constitué de n'importe quelle matière conductrice, avantageusement d'une feuille de matière plastique chargée de fibres conductrices, notamment de fibres de carbone. Le contact entre le collecteur et l'électrode est assuré soit par pression, de préférence par soudure ou par collage au moyen d'une colle conductrice, de préférence une résine époxy chargée de carbone.

La Demanderesse a d'ailleurs constaté avec surprise qu'un tel mode de prélèvement du courant sur des électrodes telles que réalisées conformément au procédé selon l'invention et comportant un taux élevé de PTFE permet d'obtenir des densités de courant de l'ordre de 300 mA/cm² pour l'hydrogène et 200 mA/cm² pour l'air pour des surtensions relativement faibles ne dépassant pas 200 millivolts par exemple.

Les caractéristiques physiques de telles électrodes sont résumées dans le tableau ci-dessous.

| | Epaisseur micromètres | $\rho$/e ohm | $\rho$ moy. ohm. cm | Densité apparente | Porosité % |
|---|---|---|---|---|---|
| Couche d'arrêt | 180 | 50 | 0,9 | 1.25 | 42 |
| Couche active | 60 | 3200 | 1,9 | 1,36 | 43 |
| Electrode | 240 | 50 | 1,2 | — | |

## Revendications

1. Procédé de fabrication en continu de bandes comportant au moins une couche mince poreuse conductrice, destinées notamment à la réalisation d'électrodes pour piles à combustibles, comprenant la préparation du matériau constitutif de ladite couche mince par mélange d'une dispersion aqueuse d'une poudre de carbone, supportant éventuellement un catalyseur, avec une émulsion d'un liant et le passage dudit matériau, sous forme pulvérulente, entre les rouleaux d'une calandreuse, caractérisé par le fait que de manière à éviter une précipitation spontanée lors du mélange, ce dernier est effectué à une température inférieure à 18°C, les pH de la dispersion de poudre et de l'émulsion de liant étant sensiblement les mêmes, puis après la précipitation du liant sur la poudre, séchage et broyage à sec, on poursuit le broyage en humidifiant au moyen d'un liquide destiné à éviter l'adhérence des grains aux rouleaux de la calandreuse tout en lubrifiant lesdits grains, le matériau ainsi obtenu, exempt de tout produit porophore, étant calandré sans utilisation de support.

2. Procédé selon la revendication 1, caractérisé par le fait qu'on utilise une dispersion aqueuse d'une poudre de carbone comprenant 10 à 50 g/litre de carbone.

3. Procédé selon l'une des revendications précédentes, caractérisé par le fait qu'on effectue un lavage à l'eau après précipitation du liant sur la poudre de carbone lorsque l'émulsion du liant comporte un stabilisant, de manière à éliminer celui-ci.

4. Procédé selon l'une des revendications précédentes, caractérisé par le fait que le liant est du polytétrafluoréthylène.

5. Procédé selon la revendication 4, caractérisé par le fait qu'on utilise une émulsion de liant comportant environ 100 à 120 g d'extrait sec par litre.

6. Procédé selon la revendication 5, caractérisé par le fait que le mélange de la dispersion de carbone et de l'émulsion de liant est effectué à une température entre 12 et 15°C.

7. Procédé selon la revendication 6, caractérisé par le fait que la précipitation est initiée, soit par élévation de la température, par exemple vers 25—30°C, soit par addition de cations, par exemple par introduction d'acide chlorhydrique dilué.

8. Procédé selon l'une des revendications précédentes caractérisé par le fait que le liquide ajouté lors du broyage est choisi dans le groupe comprenant la cyclohexanone, la tétraline, le décaline, le white spirit.

9. Procédé selon la revendication 8, caractérisé par le fait qu'on humidifie par environ 15 à 20 ml de liquide pour 30 à 50 g de produit solide.

10. Procédé selon l'une des revendications précédentes, caractérisé par le fait que la porosité de la couche mince est ajustée à une valeur prédéterminée par réglage notamment du débit de la poudre alimentant la calandreuse et de la

7   0 027 648   8

vitesse de rotation des cylindres de la calandreuse.

11. Procédé de fabrication selon l'une des revendications précédentes, caractérisé par le fait que l'épaisseur de la couche est de l'ordre de quelques microns à quelques centaines de microns.

12. Procédé de fabrication de bandes multicouches selon lequel après réalisation séparée de chacune des couches préparée selon l'une des revendications 1 à 11 on effectue un cocalandrage à froid.

13. Procédé selon la revendication 12, caractérisé par le fait que la bande comporte deux couches, une couche dite couche d'arrêt, comportant du carbone et un liant, une couche dite couche catalytique comportant du carbone supportant un catalyseur et un liant.

14. Procédé selon la revendication 13, caractérisé par le fait que le liant étant du polytétrafluoréthylène sa proportion pondérale dans chacune des couches est comprise entre 20 et 99%.

15. Utilisation d'une bande multicouches obtenue selon l'une des revendications précédentes, comme électrode pour pile à combustibles, en particulier dans une pile où le prélèvement du courant est effectué par points ou par lignes mutuellement espacés d'une distance de l'ordre du millimètre, au moyen d'au moins un collecteur à conductivité électronique.

**Patentansprüche**

1. Verfahren zur kontinuierlichen Herstellung von Bändern, die mindestens eine dünne, poröse, leitende Schicht aufweisen und insbesondere zur Herstellung von Elektroden von Brennstoffzellen bestimmt sind, wobei das Verfahren die Herstellung des die dünne Schicht bildenden Materials durch Mischung einer wässrigen Dispersion eines Kohlenstoffpulvers, das eventuell einen Katalysator trägt, mit einer Emulsion eines Bindemittels und den Durchgang des Materials in Pulverform zwischen den Rollen eines Kalanders umfaßt, dadurch gekennzeichnet, daß, zur Vermeidung einer spontanen Ausfällung während des Mischens, das Mischen bei einer Temperatur unter 18°C erfolgt, wobei die pH-Werte der Pulverdispersion und der Bindemittelemulsion i.w. gleich sind, daß dann nach der Ablagerung des Bindemittels auf dem Pulver, dem Trocknen und dem Zermahlen des Trockenguts, unter Anfeuchten mit einer Flüssigkeit, die das Haften der Körner an den Rollen des Kalanders vermeiden soll und die gleichzeitig die Körner schmiert, weiter gemahlen wird und das so erhaltene Material, das kein porenbildendes Produkt enthält, ohne Verwendung von Trägern kalandriert wird.

2. Verfahren nach Anspruch 1, dadurch gekennzeichnet, daß eine wässrige Dispersion eines Kohlenstoffpulvers verwendet wird, die 10 bis 50 g pro Liter Kohlenstoff enthält.

3. Verfahren nach einem der vorstehenden Ansprüche, dadurch gekennzeichnet, daß man, wenn die Emulsion des Bindemittels einen Stabilisator enthält, das Material nach der Ablagerung des Bindemittels auf das Kohlenstoffpulver mit Wasser wäscht, um diesen Stabilisator zu entfernen.

4. Verfahren nach einem der vorstehenden Ansprüche, dadurch gekennzeichnet, daß das Bindemittel Polytetrafluoräthylen ist.

5. Verfahren nach Anspruch 4, dadurch gekennzeichnet, daß eine Emulsion des Bindemittels verwendet wird, die etwa 100 bis 120 g Trockenextrakt pro Liter aufweist.

6. Verfahren nach Anspruch 5, dadurch gekennzeichnet, daß die Mischung der Kohlenstoffdispersion und der Bindemittelemulsion bei einer Temperatur zwischen 12 und 15°C erfolgt.

7. Verfahren nach Anspruch 6, dadurch gekennzeichnet, daß die Fällung entweder durch Erhöhung der Temperatur, z.B. auf 25—30°C, oder durch Hinzufügen von Kationen, z.B. durch Einführung von gelöster Chlorhydridsäure, ausgelöst wird.

8. Verfahren nach einem der vorstehenden Ansprüche, dadurch gekennzeichnet, daß die während des Zermahlens zugefügte Flüssigkeit aus der Gruppe ausgewählt wird, die Cyclohexanon, Tetralin, Decalin und White Spirit umfaßt.

9. Verfahren nach Anspruch 8, dadurch gekennzeichnet, daß 30 bis 50 g Festprodukt mit etwa 15 bis 20 ml Flüssigkeit angefeuchtet werden.

10. Verfahren nach einem der vorstehenden Ansprüche, dadurch gekennzeichnet, daß die Porosität der dünnen Schicht auf einen vorbestimmten Wert eingestellt wird insbesondere durch Regulierung der Pulverzufuhr zum Kalander und der Rotationsgeschwindigkeit der Zylinder des Kalanders.

11. Herstellungsverfahren nach einem der vorstehenden Ansprüche, dadurch gekennzeichnet, daß die Dicke der Schicht zwischen einigen Mikrometern und einigen hundert Mikrometern liegt.

12. Verfahren zur Herstellung von Vielschicht-Bändern, gemäß dem nach der getrennten Herstellung jeder der Schichten, die nach einem der Ansprüche 1 bis 11 hergestellt wurden, eine gemeinsame Kalt-Kalandrierung erfolgt.

13. Verfahren nach Anspruch 12, dadurch gekennzeichnet, daß das Band zwei Schichten aufweist, nämlich eine sogenannte Halteschicht, die Kohlenstoff und ein Bindemittel aufweist, und eine sogenannte katalytische Schicht, die Kohlenstoff aufweist, der einen Katalysator und ein Bindemittel trägt.

14. Verfahren nach Anspruch 13, dadurch gekennzeichnet, daß das Bindemittel Polytetrafluoräthylen ist und sein Gewichtsanteil in jeder der Schichten zwischen 20 und 99% liegt.

15. Verwendung eines Vielschicht-Bandes, das gemäß einem der vorstehenden Ansprüche hergestellt wurde, als Elektrode für eine Brennstoffzelle, insbesondere in einer Zelle, in der die Stromentnahme punkt- oder zeilenartig mittels eines Kollektors mit elektronischer Leitfähigkeit erfolgt, wobei die Punkte oder Zeilen voneinander einen Abstand von etwa einem Millimeter haben.

## Claims

1. A method for continuously producing strips comprising at least one thin porous conductive layer, particularly designed for the production of fuel cell electrodes, comprising the preparation of the material constituting said thin layer by mixing an aqueous dispersion of a carbon powder which may carry a catalyst, with an emulsion of a binder, and the passage of said material, in powder form, between the rolls of a calender, characterized in that in order to avoid a spontaneous precipitation during the mixing process, the latter is effected at a temperature below 18°C, the pH values of the powder dispersion and of the binder emulsion being essentially the same, then, after the precipitation of the binder on the powder, a drying and a dry crushing operation, the crushing is continued by moistening with a liquid destined to avoid the adherence of the grains to the rolls of the calender while lubricating said grains, the material thus obtained, without any poro-forming product, being calendered without the utilization of a support.

2. A method according to claim 1, characterized in that an aqueous dispersion of a carbon powder is used which contains 10 to 50 g/liter of carbon.

3. A method according to one of the preceding claims, characterized in that a washing with water is effected after the precipitation of the binder on the carbon powder in case the binder emulsion comprises a stabilizing agent, in order to remove the latter.

4. A method according to one of the preceding claims, characterized in that the binder is polytetrafluorethylene.

5. A method according to claim 4, characterized in that the binder emulsion comprises about 100 to 120 g of dry extract per liter.

6. A method according to claim 5, characterized in that the mixing of the carbon dispersion and the binder emulsion is effected at a temperature between 12 and 15°C.

7. A method according to claim 6, characterized in that the precipitation is initiated either by increasing the temperature to for example 25—30°C or by adding cations, for example by the introduction of diluted hydrochloric acid.

8. A method according to one of the preceding claims, characterized in that the liquid adding during the crushing is selected from the group comprising cyclohexanone, tetralin, decalin and white spirit.

9. A method according to claim 8, characterized in that 30 to 50 g of dry product are moistened with about 15 to 20 ml of liquid.

10. A method according to one of the preceding claims, characterized in that the porosity of the thin layer is adjusted to a predetermined value especially by regulating the feed rate of the powder feeding the calender and the rotation speed of the cylinders of the calender.

11. A method according to one of the preceding claims, characterized in that the thickness of the layer is in the range from about some micrometers to some hundred micrometers.

12. A method for producing multiplayer strips according to which, after the separate realization of each of the layers according to one of the claims 1 to 11, a common cold calendering is carried out.

13. A method according to claim 12, characterized in that the strip comprises two layers, one layer called barrier layer comprising carbon and a binder, and a layer called catalytic layer comprising carbon which supports a catalyst and a binder.

14. A method according to claim 13, characterized in that the binder being polytetrafluorethylene, its proportion by weight is included in the range extending from 20 to 99%.

15. The utilization of a multilayer strip obtained according to one of the preceding claims, as an electrode for a fuel cell, in particular a cell where the current is collected at points or lines mutually distanced by about one millimeter, by means of at least one electronically conductive collector.